# DEMANDE DE BREVET EUROPEEN

(11) **EP 3 506 072 A1**
(43) Date de publication de la demande: **03.07.2019**
(21) Numéro de dépôt: 18210638.5
(22) Date de dépôt: 06.12.2018
(51) Int. Cl.: G06F 3/0482, G06F 3/0488, H04L 12/58, G06F 16/14, G06F 17/21

(54) **INTERFACE D'UTILISATEUR À INTERACTION PERFECTIONNÉE PAR PRÉSENTATION DE CONTENU INFORMATIF APPROPRIÉ**

(30) Priorité: 26.12.2017 FR 1763223
(71) Demandeur: Orange, 75015 Paris (FR)
(72) Inventeur: RIERA, Julien, 92326 Châtillon cedex (FR)
(74) Mandataire: Cabinet Plasseraud

(57) **Abrégé**

L'invention vise une interface d'utilisateur opérant selon un menu conversationnel avec interaction entre l'utilisateur et le dispositif. Le menu conversationnel comporte au moins une rubrique de question/réponse correspondant à une question posée à l'utilisateur via l'interface et d'attente (S1) de réponse de l'utilisateur via l'interface. On prévoit en particulier les étapes:
- Associer à cette rubrique de question/réponse, au moins un contenu informatif d'aide à l'utilisateur, en relation avec ladite rubrique de question/réponse, et
- Pendant l'exécution de ladite rubrique de question/réponse :
∘ détecter (S3) la réception via l'interface d'un signal de forme prédéfinie, de demande d'aide de l'utilisateur,
∘ et, le cas échéant, proposer (S4) à l'utilisateur via l'interface ledit contenu informatif, avant de se mettre en attente de la réponse de l'utilisateur (S1).

## Description

L'invention concerne la gestion d'un dispositif informatique à interface d'utilisateur opérant selon un menu conversationnel avec interaction entre l'utilisateur et son dispositif.

L'interaction conversationnelle entre un humain et un dispositif informatique se développe. De plus en plus d'agent conversationnel (ou « chat-bot » en anglais) permettent de guider l'utilisateur dans son interaction avec un service informatique. Ces chat-bot proposent à l'utilisateur une interaction textuelle (et/ou vocale). Ces chat-bot proposent souvent à l'utilisateur de procéder à un choix parmi plusieurs possibilités afin de poursuivre l'échange.

Les chat-bots permettent d'interfacer l'utilisateur avec différents type d'usages et donc de services, avec notamment différents types de présentation de données que l'utilisateur a demandées. Il est possible que les choix proposés par le dispositif ne soient pas explicites pour l'utilisateur.

L'utilisateur peut demander des explications en entamant une conversation le plus souvent écrite avec le chat-bot à propos de ces différentes options.

Un problème résultant est que cette conversation s'inscrit dans un nouveau flux de conversation et éloigne l'utilisateur de l'étape initiale lui demandant un choix. Le ressenti de l'utilisateur est que cette nouvelle conversation vient « polluer » un flux de conversation logique.

Un autre problème est que l'interface demande à l'utilisateur de rentrer dans un type d'interaction écrite pour un ou plusieurs des choix proposés, et donc apporte de la pénibilité à l'utilisateur.

La présente invention vient améliorer cette situation.

Elle propose à cet effet un procédé mis en oeuvre par un dispositif informatique comprenant une interface d'utilisateur opérant selon un menu conversationnel avec interaction entre l'utilisateur et le dispositif, le menu conversationnel comportant au moins une rubrique de question/réponse correspondant à une question posée à l'utilisateur via l'interface et d'attente de réponse de l'utilisateur via l'interface. En particulier, le procédé comprenant :
- Associer à ladite rubrique de question/réponse, au moins un contenu informatif d'aide à l'utilisateur, en relation avec ladite rubrique de question/réponse, et
- Pendant l'exécution de ladite rubrique de question/réponse :
   ∘ détecter la réception via l'interface d'un signal de forme prédéfinie, de demande d'aide de l'utilisateur,
   ∘ et, sur réception d'une demande d'aide de l'utilisateur, proposer à l'utilisateur via l'interface ledit contenu informatif, avant de se mettre en attente de la réponse de l'utilisateur.

Ainsi, selon l'un des avantages que procure la présente invention, l'utilisateur peut interrompre le menu et demander un contenu informatif d'explication avant de saisir son choix, afin de mieux comprendre ce que peut proposer l'interface en réponse au choix de l'utilisateur. L'utilisateur gagne ainsi un temps considérable d'interaction conversationnelle avec l'interface et accède directement à la forme de données qui convient réellement à son choix.

Dans une réalisation, la réponse attendue de l'utilisateur est relative à un choix parmi une pluralité de types de présentation de données via l'interface, et le contenu informatif précité illustre au moins un exemple de présentation de données pour une partie au moins des types de ladite pluralité de types de présentation.

Typiquement, on peut prévoir avantageusement un exemple de présentation de données par choix possible de l'utilisateur, lequel peut alors naviguer d'un exemple de présentation à un autre et choisir *in fine* la forme de présentation qui lui convient le mieux pour des données qu'il a effectivement demandées via l'interface.

Dans une forme de réalisation où l'interface d'utilisateur comporte une interface graphique, on peut prévoir que :
- l'interface graphique, pendant l'exécution de la rubrique de question/réponse, affiche une pluralité de boutons sélectionnables chacun par l'utilisateur, chaque bouton correspondant à un choix possible de présentation de données parmi la pluralité de types de présentation,
et le procédé peut comporter alors :
- Associer à chaque bouton un contenu informatif illustrant un exemple de présentation de données parmi ladite pluralité de types de présentation de données, et
- Pendant l'affichage des boutons :
   ∘ détecter la réception via l'interface d'un signal de forme prédéfinie, de demande d'aide de l'utilisateur, en lien avec l'un des boutons sélectionné par l'utilisateur,
   ∘ et, sur réception d'une demande d'aide de l'utilisateur, afficher sur l'interface graphique le contenu informatif illustrant au moins un exemple de présentation de données selon le type de présentation correspondant au bouton sélectionné par l'utilisateur.

Ainsi, l'utilisateur peut visualiser directement les exemples de présentation que lui propose l'interface. Il peut s'agir d'exemples préenregistrés et ne nécessitant pas une grande durée de traitement avant leur affichage. Il peut s'agir aussi d'informations déjà présentées à l'utilisateur dans le passé et stockées en mémoire pour lui afficher à titre d'exemples ces présentations de données qu'il a déjà connues. Il peut ainsi choisir la présentation qui lui semble la plus appropriée relativement à ses attentes.

Dans une réalisation où l'interface graphique est de type tactile, un appui long sur l'un des boutons sélectionné par l'utilisateur peut générer ledit signal prédéfini en lien avec ce bouton sélectionné, et provoquer ainsi l'affichage du contenu informatif correspondant à ce bouton sélectionné, tandis qu'un appui court sur le bouton sélectionné peut provoquer l'affichage d'une présentation de données demandées par l'utilisateur via le menu conversationnel, selon le type de présentation correspondant au bouton sélectionné.
Ainsi, à l'aide d'un même emplacement de bouton, il est possible intuitivement de prévisualiser un exemple de présentation associée au bouton (appui long), et de la sélectionner rapidement si elle convient à l'utilisateur (appui court).

Dans une réalisation, l'interface indique par un signal prédéfini la disponibilité d'au moins un exemple de présentation de données, pour un essai possible de l'utilisateur de l'exemple précité avant de donner une réponse.
Cette indication permet ainsi à l'utilisateur de savoir qu'un exemple est disponible et peut rapidement le visualiser par exemple, s'il le souhaite.

Dans une réalisation, la proposition à l'utilisateur du contenu informatif via l'interface est effectuée en dehors d'un menu conversationnel en cours entre l'utilisateur et le dispositif.

Par exemple, dans le cas où l'interface d'utilisateur comporte une interface graphique, le contenu informatif peut être affiché en surimpression par rapport à des messages échangés pendant une interaction en cours entre l'utilisateur et le dispositif.

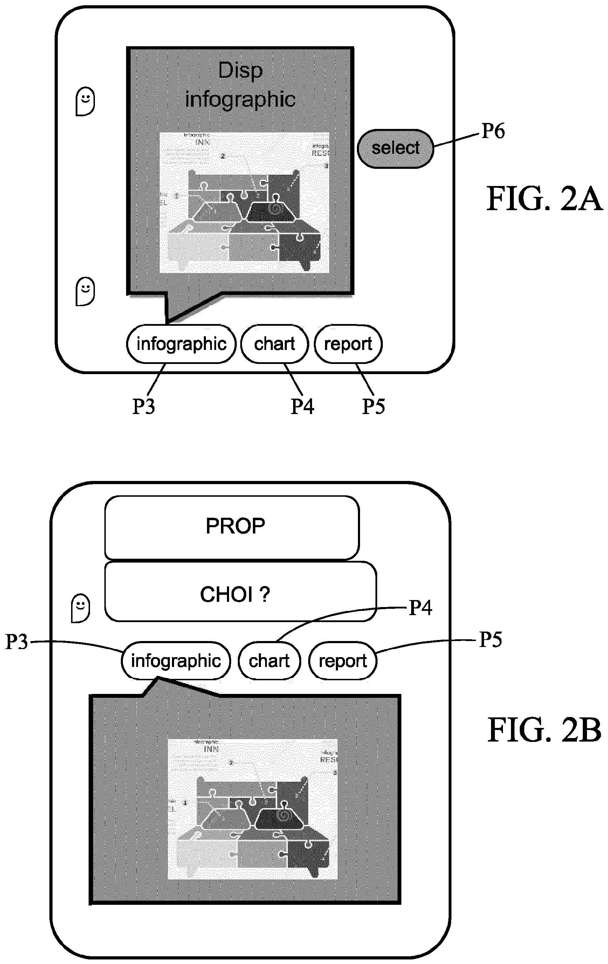

Une telle réalisation est illustrée sur la figure 2B par exemple (commentée en détails plus loin) où il apparait que la présentation du contenu est affichée (dans l'encart grisé) mais peut disparaitre ensuite de la succession de messages échangés « PROP » , « CHOI ? », etc. (représentés quant à eux sur fond blanc, par opposition à l'encart grisé).

Les avantages d'une telle réalisation et notamment d'une telle surimpression sont notamment :
- l'affichage du contenu informatif peut être fermée une fois la réponse de l'utilisateur effectuée et ainsi le contenu informatif n'apparaît plus sur l'interface graphique affichant la conversation en cours entre l'utilisateur et le dispositif : on réduit ainsi la pollution de la conversation en cours ;
- le contenu informatif peut ne pas être enregistré alors dans l'historique de conversation : on réduit ainsi la pollution des historiques de conversation.

Dans une réalisation, le menu conversationnel est exécuté dans le cadre d'une application de type chat-bot.
Une telle application est avantageuse dans la mesure où, dans ce type d'application, la plupart des messages sont échangés par écrit. Ainsi, un système d'aide par présentation d'exemples améliore la qualité de l'interface et limite le nombre d'échanges de messages que l'utilisateur a à écrire. Toutefois, bien entendu, des variantes d'application sont possibles et la présentation d'un contenu informatif tel qu'un exemple de présentation de données peut intervenir en réalité dans tout type d'interface d'utilisateur, au sens large.

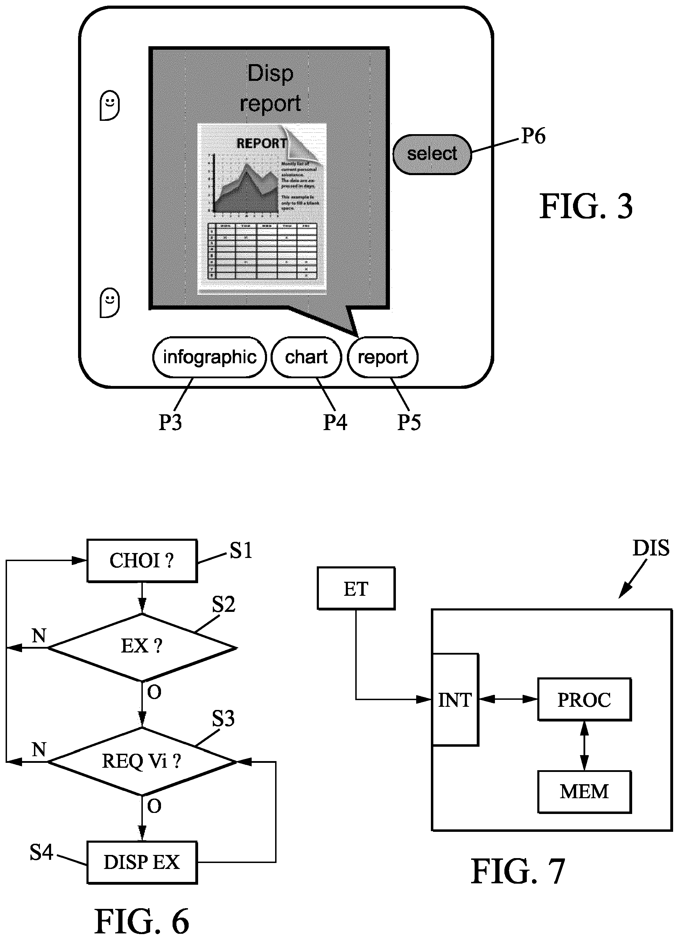

La présente invention vise un dispositif informatique à interface d'utilisateur opérant selon un menu conversationnel avec interaction entre l'utilisateur et le dispositif, ce dispositif comportant en particulier un circuit de traitement pour la mise en oeuvre du procédé ci-avant. Un exemple de réalisation d'un tel circuit de traitement est présenté sur la figure 7, commentée plus loin.

La présente invention vise aussi un programme informatique comportant des instructions pour la mise en oeuvre du procédé ci-avant, lorsque ces instructions sont exécutées par un processeur. Un exemple d'algorithme général d'un tel programme informatique est présenté sur la figure 6 commentée plus loin.

D'ailleurs, d'autres avantages et caractéristiques de l'invention apparaîtront à la lecture de la description ci-après, d'exemples de réalisation présentés à titre non limitatif, et à l'examen des dessins annexés, sur lesquels :
- la figure 1 illustre schématiquement une interface graphique, sur laquelle un choix de l'utilisateur, parmi trois types de présentation de données P3, P4 et P5, est proposé,
- la figure 2A illustre schématiquement l'interface graphique de la figure 1 après la sélection par l'utilisateur d'un exemple de présentation de données à afficher, parmi trois exemples possibles de visualisation des données,
- la figure 2B illustre schématiquement une alternative à la forme de l'interface graphique de la figure 2A,
- la figure 3 illustre schématiquement l'interface graphique de la figure 1 après la sélection par l'utilisateur d'un exemple de présentation de données, autre que celui illustré sur les figures 2A et 2B,
- la figure 4 illustre schématiquement l'interface graphique de la figure 3, avec possibilité de revenir au menu précédent (écran de droite de la figure 4),
- la figure 5 illustre une forme de réalisation dans laquelle l'interface graphique présente des boutons P0 indiquant à l'utilisateur qu'un exemple de présentation à afficher est disponible, s'il le souhaite,
- la figure 6 résume les différentes étapes du procédé selon un exemple de réalisation de l'invention,
- la figure 7 illustre un circuit de traitement d'un dispositif selon un exemple de réalisation de l'invention, pour la mise en oeuvre du procédé ci-avant.

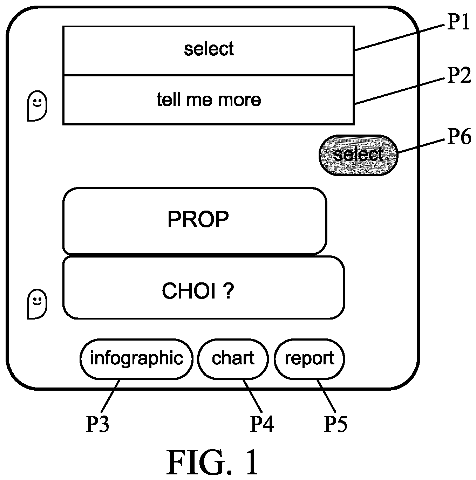

On se réfère tout d'abord à la figure 1 sur laquelle, l'interface affiche un message de proposition PROP à l'utilisateur, comme par exemple « *voulez-vous les proportions respectives de l'activité par département de votre entreprise sur l'année écoulée* ?». Si l'utilisateur manifeste effectivement un intérêt pour cette proposition PROP, ici l'interface graphique étant tactile, il appuie sur la zone *« select* » référencée P1 sur la figure 1. En revanche, s'il souhaite auparavant connaitre davantage la nature des données qui lui seraient affichées, il peut appuyer sur la zone P2 : « *tell me more »* auquel cas une conversation interactive peut démarrer avec l'interface pour expliquer quelles données pourraient être présentées, etc., selon une forme classique de l'art antérieur.

Mais en particulier ici, si l'utilisateur appui sur la zone P1 pour sélectionner la proposition PROP de l'interface (la sélection de la proposition PROP par l'utilisateur occasionnant la bulle de dialogue « *select* » référencée P6), l'interface propose alors à l'utilisateur plusieurs choix possibles de présentation de ces données (message CHOI ? adressé à l'utilisateur), par exemple :
- sous la forme d'un infographique (choix sélectionnable par le bouton P3),
- ou sous la forme d'histogrammes (choix sélectionnable par le bouton P4),
- ou encore sous la forme d'un rapport d'activité détaillé avec du texte et des graphiques par exemple (choix sélectionnable par le bouton P5).

Selon un aspect de l'invention, l'utilisateur peut alors requérir la visualisation d'un exemple ici pour chaque choix. À cet effet, un signal prédéfini correspondant à un appui long sur l'interface tactile, par exemple sur le bouton P3, provoque l'affichage d'un exemple d'une représentation infographique comme illustré sur la figure 2A. Dans l'exemple illustré sur la figure 2A, la présentation prend tout l'écran, tandis que dans l'exemple de la figure 2B, la présentation est de dimension réduite et laisse apparaître les derniers messages échangés entre l'utilisateur et son interface.

En revanche, un appui court sur le bouton P3 provoque la sélection de cette forme de présentation des données demandées par l'utilisateur.

Si, par ailleurs, l'utilisateur souhaite tester la forme de présentation de type « rapport d'activité », il peut procéder à un appui long sur le bouton P5 et obtenir ainsi l'exemple d'une présentation selon un rapport d'activité, tel que présenté sur la figure 3.

Si l'utilisateur préfère cette forme de présentation selon la figure 3 à celle illustrée sur l'une des figures 2A et 2B, il peut procéder à un appui court sur le bouton P5 et obtenir alors la présentation des données qu'il souhaite selon la forme de la figure 3.

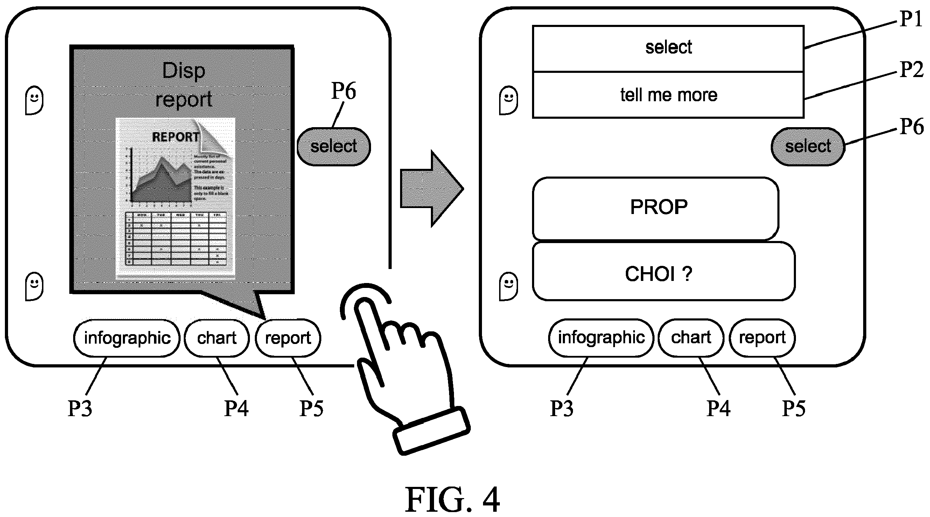

Si au contraire il ne souhaite pas la forme de présentation de la figure 3 et revenir aux choix de présentation à sélectionner, en référence à la figure 4, il peut toucher l'écran tactile en une zone quelconque en-dehors du bouton de confirmation P5 de la présentation en cours d'affichage, et revenir ainsi à la page d'écran initiale correspondant à la figure 1.

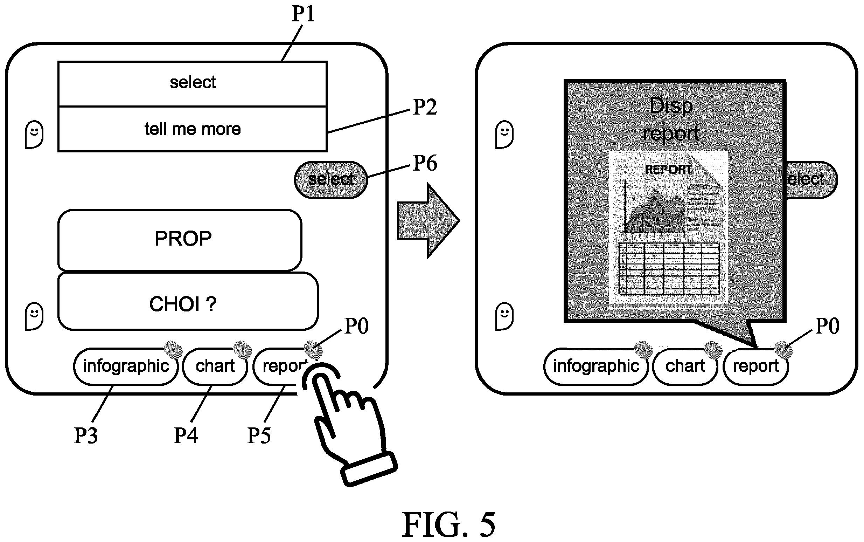

En référence à la figure 5, il est proposé dans ce mode de réalisation d'afficher des formes de pastilles P0 dans l'exemple illustré, indiquant ainsi à l'utilisateur la disponibilité d'exemples de présentation de données, qu'il peut visualiser avant de choisir définitivement la présentation dans laquelle il souhaite les données qu'il a demandées.

On se réfère maintenant à la figure 6, sur laquelle, dans le déroulement du menu interactif conversationnel, un choix est demandé à l'utilisateur à l'étape S1. Dans le cas où des exemples de types de présentation, pour présenter des données relatives à ce choix, sont disponibles pour être montrés à l'utilisateur (flèche O en sortie du test S2), le dispositif d'interface se met en attente d'une requête par l'utilisateur de visualisation d'un exemple de présentation, à l'étape S3. Si l'utilisateur interagit avec l'interface de manière à visualiser un exemple particulier de présentation (flèche O en sortie du test S3), l'exemple de présentation sélectionné par l'utilisateur est affiché par l'interface à l'étape S4, puis le dispositif d'interface met à nouveau en attente d'une éventuelle demande de visualisation d'un autre exemple de présentation à l'étape S3. En revanche, si l'utilisateur ne souhaite pas visualiser d'exemple (flèche N en sortie du test S3), le dispositif d'interface revient à l'étape S1 d'attente d'un choix de l'utilisateur. Bien entendu, si aucun exemple n'est disponible pour une prévisualisation par l'utilisateur (flèche N en sortie du test S2), le dispositif d'interface reste en attente d'un choix de l'utilisateur à l'étape S1.

On se réfère maintenant à la figure 7 sur laquelle un dispositif d'interface DIS comprend un écran tactile ET, connecté à un circuit de traitement comprenant typiquement :
- une mémoire MEM pour stocker au moins des données d'instructions d'un programme informatique au sens de l'invention, la figure 6 pouvant illustrer alors un algorithme général d'un tel programme informatique,
- un processeur PROC connecté à la mémoire MEM pour lire ces données d'instructions depuis la mémoire MEM et exécuter le programme informatique précité, opérant ainsi les étapes du procédé présenté ci-avant, et
- une interface de communication INT entre l'écran tactile ET et le processeur PROC pour recevoir des entrées de l'écran tactile, et envoyer des données à afficher sur l'écran tactile.

Typiquement, la mémoire MEM peut stocker en outre des données de contenus, tels que des données d'exemples de types de présentation, comme présenté ci-avant en référence aux figures 1 à 5.

Ainsi, selon l'un des avantages que présente l'invention, au moins sous l'une de cette forme de réalisation, l'utilisateur peut solliciter une explication du choix proposé à l'étape S1, et ceci sans passer par une nouvelle interaction conversationnelle (qui peut être d'autant fastidieuse qu'elle est écrite dans l'exemple de réalisation d'une interface tactile). La mise en oeuvre de l'invention permet de lui faire gagner du temps et passer plus facilement d'une explication à une autre.

Bien entendu, la présente invention ne se limite pas aux formes de réalisation décrites ci-avant à titre d'exemples ; elle s'étend à d'autres variantes.

Ainsi on comprendra que l'interface peut être de type graphique, tactile, comme dans les exemples de réalisation ci-avant. Néanmoins, une interface avec interaction vocale peut être envisagée de la même manière, avec présentation d'exemples de contenus vocaux.

Dans l'exemple ci-avant en référence aux figures 1 à 5, si l'utilisateur réalise une pression longue alors un élément graphique apparait au-dessus (figure 2A) ou en dessous (figure 2B), éventuellement dans le flux de conversation, en apportant des précisions et/ou des compléments sur l'élément de choix de l'utilisateur. Bien entendu, malgré l'exhaustivité des exemples de réalisation présentés ci-avant, d'autres dispositions et présentations graphiques des fonctions associées à ces présentations d'exemples peuvent être prévues.

Par ailleurs, ces exemples et les précisions et/ou compléments qu'ils apportent peuvent être de différentes natures. Il peut s'agir de contenus informatifs écrits, ou autres éléments multimédias (graphiques, graphiques animés dont vidéos, vues sur un flux vidéo live ou non live, éléments applicatifs - avec par exemple la possibilité d'entrer un mot de passe avant d'accéder à un deuxième niveau d'information, ou afficher un flux vidéo de l'appareil en y ajoutant une surimpression d'information, ou autres).

Par ailleurs, en référence à la figure 4, une fois que l'utilisateur appuie sur l'interface (sauf sur l'élément interactif P5 de cette « aide contextuelle ») alors l'élément d'aide disparait, et l'action proposée par le bouton P5 actionnant le choix correspondant (visualiser les données demandées selon le choix « *REPORT* ») n'est pas lancée. En variante, il peut être prévu un bouton en tant que tel pour retourner à l'étape précédente du menu. Par ailleurs, le dispositif attend que l'utilisateur effectue un appui sur l'un des choix P3 à P5, selon un appui court ou un appui long comme expliqué précédemment. Toutefois, là encore, des alternatives sont possibles à une forme de signal selon un appui court ou un appui long, comme par exemple un appui long effectivement (pour avoir plus de précisions sur les éléments de choix) et deux appuis courts pour la sélection.

Par ailleurs, il a été présenté ci-avant en référence à la figure 5 une réalisation dans laquelle des boutons d'interface (les pastilles P0) identifient les éléments pour lesquels un contenu informatif est disponible afin d'en faciliter l'usage et de ne pas laisser à l'utilisateur le rôle de chercher quels éléments du menu interactif ont un contenu informatif associé. En variante d'une présentation sous la forme d'une pastille (logo ou autre), il peut être prévu un autre élément graphique distinctif tel que par exemple un surlignage du texte, une couleur différente, ou autres.

## Revendications

1. Procédé mis en oeuvre par un dispositif informatique comprenant une interface d'utilisateur opérant selon un menu conversationnel avec interaction entre l'utilisateur et le dispositif, le menu conversationnel comportant au moins une rubrique de question/réponse correspondant à une question posée à l'utilisateur via l'interface et d'attente de réponse de l'utilisateur via l'interface, le procédé comprenant :
- Associer à ladite rubrique de question/réponse, au moins un contenu informatif d'aide à l'utilisateur, en relation avec ladite rubrique de question/réponse, et
- Pendant l'exécution de ladite rubrique de question/réponse :
o détecter la réception via l'interface d'un signal de forme prédéfinie, de demande d'aide de l'utilisateur,
o et, sur réception d'une demande d'aide de l'utilisateur, proposer à l'utilisateur via l'interface ledit contenu informatif, avant de se mettre en attente de la réponse de l'utilisateur.

2. Procédé selon la revendication 1, dans lequel la réponse attendue de l'utilisateur est relative à un choix parmi une pluralité de types de présentation de données via l'interface, et ledit contenu informatif illustre au moins un exemple de présentation de données pour une partie au moins des types de ladite pluralité de types de présentation.

3. Procédé selon la revendication 2, dans lequel, l'interface d'utilisateur comportant une interface graphique,
- ladite interface graphique, pendant l'exécution de ladite rubrique de question/réponse, affiche une pluralité de boutons sélectionnables chacun par l'utilisateur,
- chaque bouton correspondant à un choix possible de présentation de données parmi ladite pluralité de types de présentation,
le procédé comportant :
- Associer à chaque bouton un contenu informatif illustrant un exemple de présentation de données parmi ladite pluralité de types de présentation de données, et
- Pendant l'affichage des boutons :
∘ détecter la réception via l'interface d'un signal de forme prédéfinie, de demande d'aide de l'utilisateur, en lien avec l'un des boutons sélectionné par l'utilisateur,
∘ et, sur réception d'une demande d'aide de l'utilisateur, afficher sur l'interface graphique le contenu informatif illustrant au moins un exemple de présentation de données selon le type de présentation correspondant au bouton sélectionné par l'utilisateur.

4. Procédé selon la revendication 3, dans lequel l'interface graphique est de type tactile, et un appui long sur l'un des boutons sélectionné par l'utilisateur génère ledit signal prédéfini en lien avec ce bouton sélectionné, et provoque l'affichage du contenu informatif correspondant à ce bouton sélectionné, tandis qu'un appui court sur le bouton sélectionné provoque l'affichage d'une présentation de données demandées par l'utilisateur via le menu conversationnel, selon le type de présentation correspondant au bouton sélectionné.

5. Procédé selon l'une des revendications 2 à 4, dans lequel l'interface indique par un signal prédéfini (P0) la disponibilité d'au moins un exemple de présentation de données, pour un essai possible de l'utilisateur dudit exemple avant de donner une réponse.

6. Procédé selon l'une des revendications précédentes, dans lequel la proposition à l'utilisateur du contenu informatif via l'interface est effectuée en dehors d'un menu conversationnel en cours entre l'utilisateur et le dispositif.

7. Procédé selon la revendication 6, dans lequel, l'interface d'utilisateur comportant une interface graphique, le contenu informatif est affiché en surimpression par rapport à des messages échangés pendant une interaction en cours entre l'utilisateur et le dispositif.

8. Procédé selon l'une des revendications précédentes, dans lequel le menu conversationnel est exécuté dans le cadre d'une application de type chat-bot.

9. Dispositif informatique à interface d'utilisateur opérant selon un menu conversationnel avec interaction entre l'utilisateur et le dispositif, comportant un circuit de traitement pour la mise en oeuvre du procédé selon l'une des revendications précédentes.

10. Programme informatique comportant des instructions pour la mise en oeuvre du procédé selon l'une des revendications 1 à 8, lorsque lesdites instructions sont exécutées par un processeur.
